# EUROPEAN PATENT SPECIFICATION

(11) **EP 1 106 058 B1**
(45) Date of publication and mention of the grant of the patent: **10.12.2003**
(21) Application number: 00500069.0
(22) Date of filing: 12.04.2000
(51) Int. Cl.: A01G 23/093

(54) **Wood harvester machine**
Böschungen-Erntemaschine
Récolteuse de broussaille

(30) Priority: 02.12.1999 ES 9902668
(43) Date of publication of application: 13.06.2001
(73) Proprietor: Serrat Alcay, José, 22510 Binaced (Huesca) (ES); Serrat Alcay, Pedro, 22510 Binaced (Huesca) (ES); Serrat Alcay, Raul, 22510 Binaced (Huesca) (ES)
(72) Inventor: Serrat Alcay, José, 22510 Binaced (Huesca) (ES); Serrat Alcay, Pedro, 22510 Binaced (Huesca) (ES)
(74) Representative: Davila Baz, Angel

(56) References cited:
- EP-A- 0 063 259
- DE-A- 2 910 352
- DE-U- 29 917 330
- FR-A- 2 503 533
- FR-A- 2 584 351
- GB-A- 2 260 683
- US-A- 4 236 554

## Description

There are currently a number of problems arising from the existence of vegetable remains from trees, shrubs, pruning, cutting, etc. that can cause fires, for example on scrubland, etc. and in general terms these existing remains are not reused as raw material for transformation since their collection is uneconomical due to the lack of appropriate technical means.

The document GB 2 260 683 discloses a cutter device according to the preamble of claim 1.

### DESCRIPTION OF THE INVENTION

With the machine of the invention, and more specifically with the use of the same, all the above mentioned problems disappear.

Furthermore, this machine is simple in its construction within the wide and complex application it carries out.

The machine carries out the collection, cutting and/or aspiration of the material and after crushing stores it in a container or tank for later use.

Therefore the machine is made up of two parts:
- Cutting and crushing of the material
- Tank or container for the crushed material.

These parts can be interconnected with one communicating directly with the other, or can be separate where means of transport for the material will be necessary.

These two parts and the machine in general can be installed on a vehicle, preferably a tractor, or on a four-wheel drive, truck, excavator and in general on any motorised apparatus that can transport and activate it where it has to work.

In accordance with the invention, the machine has a structure or casing which has elements to attach it to the carrier vehicle.

According to the way the machine is to work, it has means to transport and move the material to be crushed into the interior of the crusher.

These means are preferably conveyor belts rotating at one end to a structure of the machine.

These conveyor belts are used when the amount of material to be crushed has a greater volume than can enter through the mouth of the intake to the machine.

The hooks on each of these conveyor belts are those that distribute the material to aid its entry into the machine.

Therefore when the material enters the machine it is crushed by a hammer crusher formed by a rotor with the corresponding hammers.

Exact cutting with blades can also be used.

After the cut is made, crushing takes place with a rotor with the same aim as that for cutting, but with the difference that around the cutter and inserted in the frame are some fixed breakers or destroyers in front of which pass the rotor hammers, very near and at great speed, and thus the material circulates between the breakers and the hammers and is easily crushed.

Granulometry is controlled by regulated screens or sieves, both by the size of the perforations and in the nearness of the same to the periphery of the rotor hammers.

When the cutter or crusher is not related or connected to the container or tank, the material must be removed from the machine and taken to the location where it is to be forced into the container. This transport is carried out by a worm gear that is open on the upper part, or by a conveyor belt so that the material flows from the lower part of the screens onto the worm gear or belt to be taken to the turbine or means of impulsion transversal to the movement.

The impulsion between the cutting and the tank is carried out by means of a turbine with blades or arms that collect the material where it is discharged by the worm gear or conveyor belt and throws it through a metal channel or flexible tube into the container.

This turbine also has the function of aspiration from within the cutting or crusher casing, creating air turbulence that goes from the intake mouth of the cutter passing through the crusher rotor, the screens, and the worm gear to the turbine, and thus achieves the aspiration effect in the cutter mouth.

In principle, there are two means of transmission that may equip the machine. The first is already known as total hydraulic, that is with equipment formed by hydraulic pumps and motors, varying the speed of the components by regulators of the amount of hydraulic flow.

The second is a system of combined hydraulic and mechanical transmission for which the first component would be an angular intake multiplicator with one intake and two outlets, that is usually obtained from the traction vehicle power from the turning axle, taking power in the longitudinal direction of running and the crusher rotor requires this in the transversal direction.

From one outlet side of this angular multiplicator will run a train of variable speed belts and pulleys to one side of the cutting rotor and material collector. At the other end of the cutter rotor and collector a variable train of belts and pulleys will pass to one end of the axle of the crusher rotor.

From the second outlet of the multiplicator a universal joint with safety gearbox will be activated to turn the turbine to impel the material into the hopper. And on the same outlet axle from the multiplicator will be mounted a pulley and belt that activates an hydraulic pump which, with a system of electrovalves, regulators and pressure switch, makes the hydraulic motor that activates the said pump turn in either direction, regulates its speed and also gives an electrical signal with the pressure switch of excess or loss of pressure, to alert the operator to the defective working of the internal transport system. With the said hydraulic motor a reducer is activated from which comes a pinion chain that turns the worm gear and also controls it at all times by means of the said hydraulic system.

The means for storing the material consists of a container that may be installed on the driver machine, hung hydraulically or attached to the casing itself. It can also be a container drawn by the driver machine itself or by another tractor, truck, etc.

The transport mechanisms from the crusher to the container consist basically of two systems:
- A system that uses the impulsion between the cutter and the tank, this being a basically pneumatic-mechanical system.
- By means of a mechanical transporter collection belt and a rubber band, etc.

The means for unloading the material can be of two types:
- A basically mechanical system that by means of hydraulic cylinders turns the basket or container and unloads it onto the ground or into another container and as a system has the peculiarity that it is able to unload the material at a height higher than the height of the collection container.
- A pneumatic-mechanical system that is formed by two propellers whose axis are parallel to each other and that turn inside the container, and in this way stir the material at the point where a blast of air from the impulsion turbine and led through appropriate pipes, pushes it out by this ejection effect through the outlet pipe.

### BRIEF DESCRIPTION OF THE DRAWINGS

Figure 1 shows a schematic view of the machine of the invention installed on a tractor vehicle.

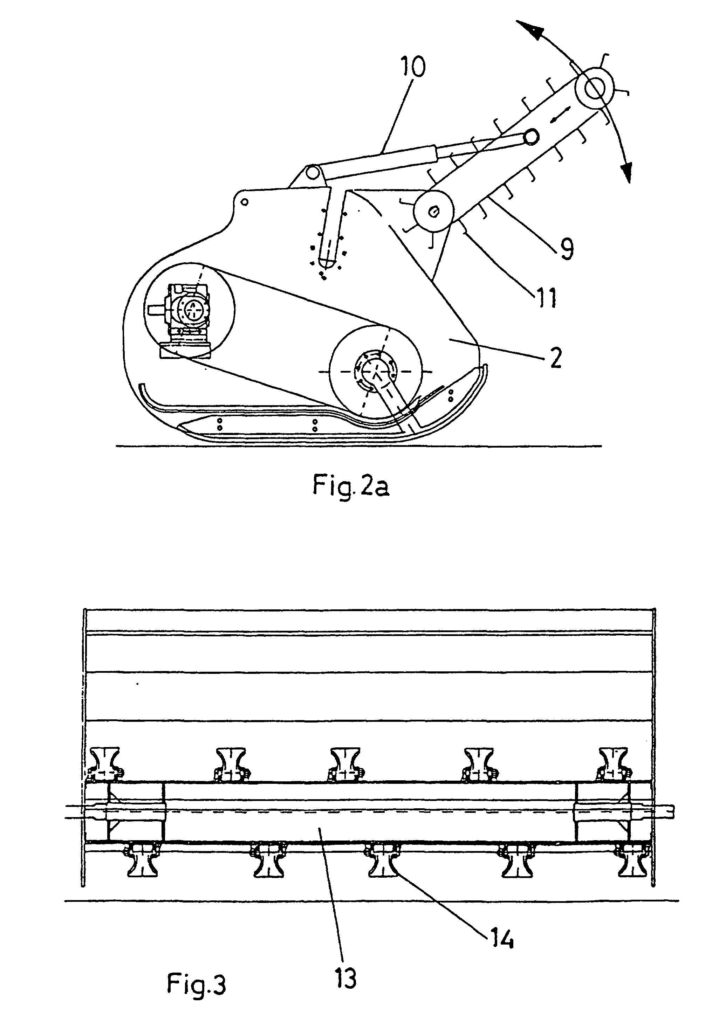

Figure 2 shows a side view of the machine.
Figure 2a shows a similar view to Figure 2.
Figure 3 shows a front view of the cutter rotor in the direction in which it is mounted.

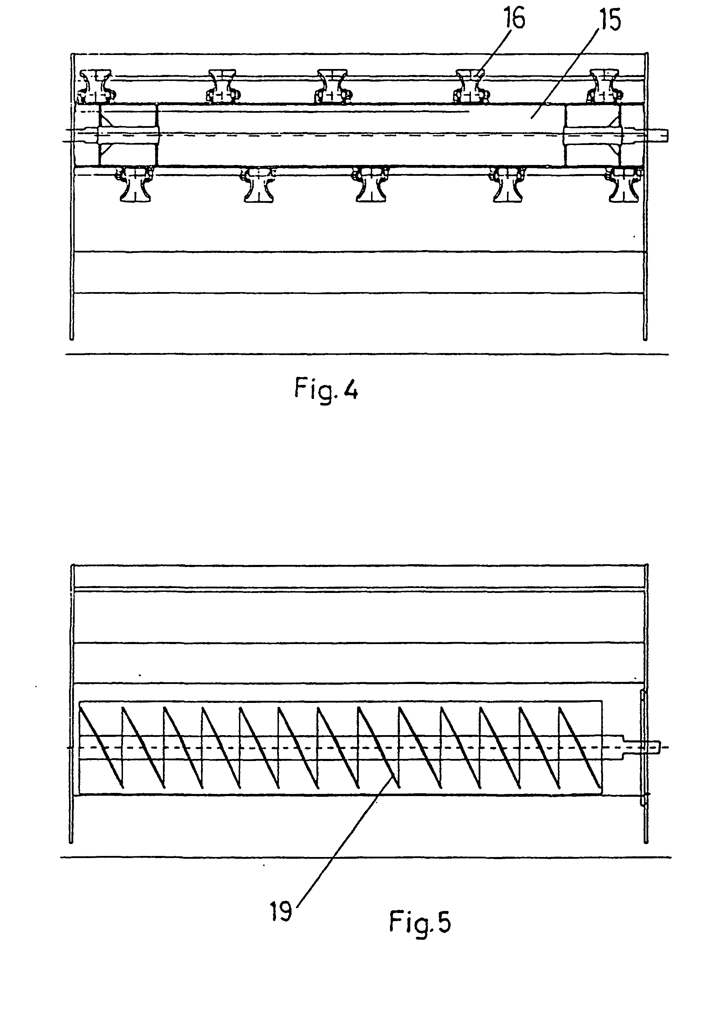

Figure 4 shows a front view of the crusher rotor in the direction in which it is mounted.
Figure 5 shows a front view of the internal worm gear transporter for the crushed material.

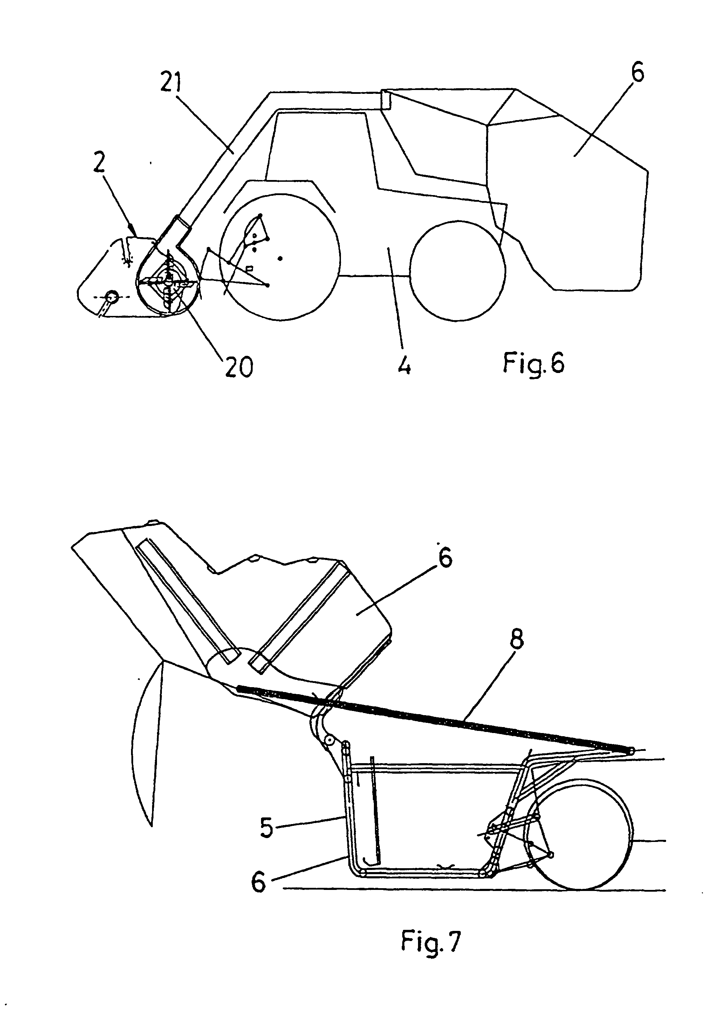

Figure 6 shows a side view similar to Figure 1, in which the impulsion turbine is shown laterally that impels the crushed material towards the container.
Figure 7 shows a side view of the hydraulic activation system from the container for crushed material that is mounted on a structure of the tractor.
Figure 8 shows a view of the pneumatic device for unloading the crushed material.
Figure 9 shows an overhead view of the impulsion system of Figure 8.

### DESCRIPTION OF A PRACTICAL EXAMPLE OF PUTTING THE INVENTION INTO PRACTICE

The machine 1 is formed by a structure or casing 2 with means for attachment 3 to the tractor vehicle 4.

Mounted on the opposite end of the attachment to this vehicle to the machine is a structure 5 to position and support a container 6 that rotates round a point 7 when some hydraulic cylinders 8 are activated.

The machine 1 has a conveyor belt 9 rotating by means of hydraulic cylinders 10 that keep the belts in position in front of the machine and collect the material impelled by the hooks 11 on each of the belts and that introduce the material into the said machine.

Positioned near to the intake 12 the machine has a cutting rotor 13 in the transversal direction on which rotor are mounted hammers 14 that make the cut.

The cut material is displaced by the centrifugal force of the cutter towards the near upper part in which is the crusher rotor 15 whose axis is parallel to the cutting rotor.

On the crusher rotor 15 are mounted some hammers 16 that crush the material, which pass facing each other and near to some fixed breakers or destroyers fixed to the internal structure of the machine.

The crushed material passes through some screens 17 located outside and near to the outlet of the material from the crusher rotor.

Based on the size of the perforations 18 of the screen, the desired granulometry of crushed material is obtained.

The material from the screen is collected by a worm gear 19 whose axis is also parallel to the axes of the cutting and crushing rotors of the material, and moves it laterally to a chamber in which is located a turbine 20 that impels the material that leaves by a conduit 21 that communicates with the container 6.

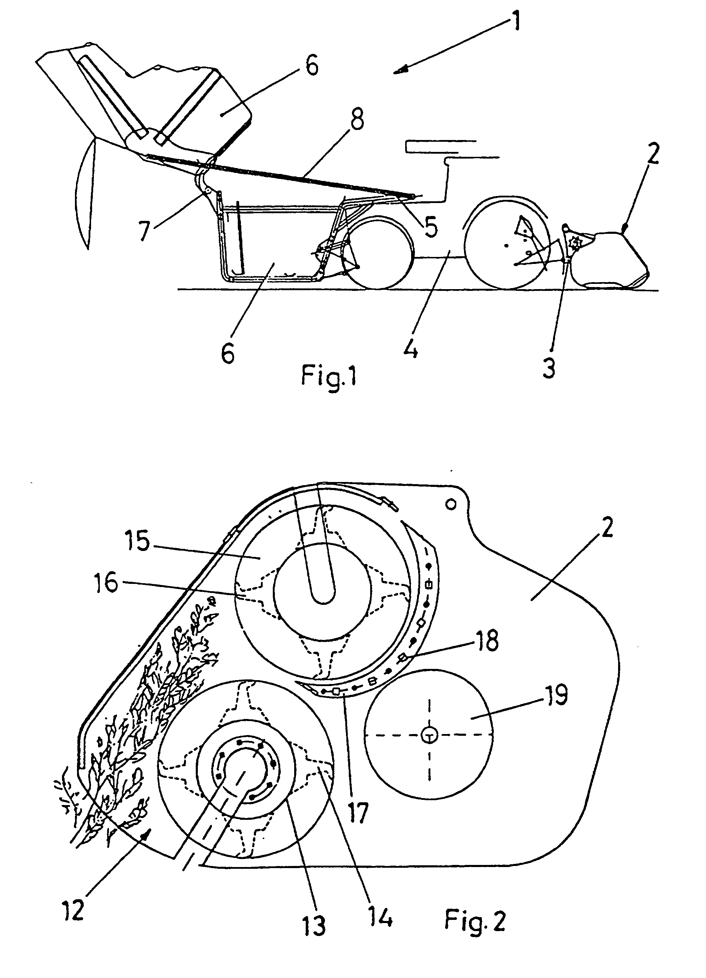

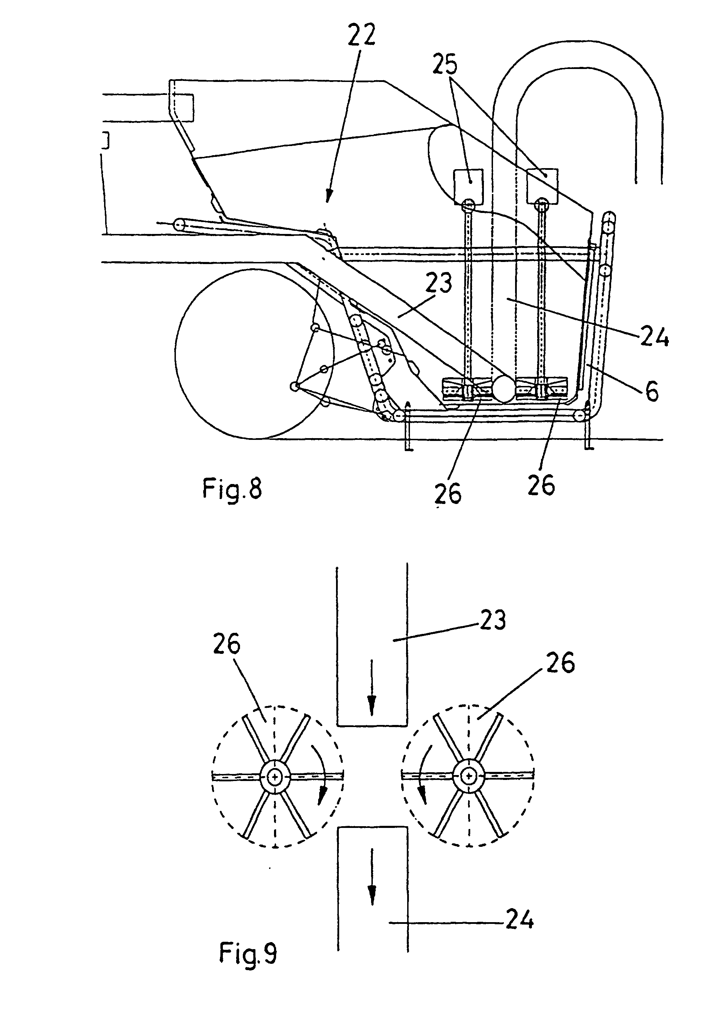

Unloading of the material in the container 6 is carried by mechanical means or systems as shown in Figure 1 or by pneumatic means or systems 22 as shown in Figures 8 and 9.

The pneumatic system 22 has a derivation or conduit 23 connected to the turbine 20. By this conduit 23 air circulates from the turbine and reaches the material in the container to which is connected an outlet pipe 24 that together with the action of the two hydraulic motors 25 that move two propellers 26, force the material to leave through the pipe 24 through which it is transported to an appropriate container for final transport.

## Claims

1. Wood harvester machine (1) of the type that has means for attachment (3) to a vehicle, such as a tractor (4), wherein it is formed by a framework or casing (2) with an end intake mouth (12) for the material, where the material is fed through means that regulate the volume of intake of the same to the machine; the material at the machine intake (12) is cut by means of an internal rotor (13) with hammers (14) that pass the centrifugal force they generate to the cut material so that it passes to a crusher rotor (15) placed parallel to the axis of the previous rotor (13) but at a higher plane, where the crusher rotor (15) has hammers (16) and crushes the material as it passes between the facing hammers near to some breakers fixed to the machine structure; **characterised in that** the crushed material passes through some screens (17) that give the material the desired granulometry and from these screens (17) the crushed material falls to a worm gear (19) which transports it to a lateral chamber in which is a turbine (20) that impels the crushed material through a conduit (21) that leads it to a container (6).

2. Machine according to claim 1 **characterised in that** the container (6) for crushed material is placed on an appropriate support structure that turns on a point (7) and which turn is governed by lateral hydraulic cylinders (8) that act to empty and reposition the container (6).

3. Machine according to claim 1 **characterised in that** the discharge of the crushed material from the container (6) is carried out by means of a current of air (22), led and proceeding from the turbine (20) that reaches the interior of the container in which are positioned two propellers (26) with vertical axes connected to the respective outlets of two hydraulic motors (25), impelling the crushed material by an ejector effect through a vertical conduit set (24) in the container (6).

4. Machine according to claim 1 **characterised in that** the means of feeding the material and regulating the intake volume of the same into the machine consist of at least one conveyor belt (9) turning round a point in the structure of the machine, where the turn of each is governed by lateral hydraulic cylinders (10); the conveyor belt (9) has hooks (11) that move the material to be crushed towards the machine intake (12).

## Patentansprüche

1. Holzemtemaschine (1) der Art, welche Mittel zum Befestigen (3) an einem Fahrzeug, wie zum Beispiel einem Traktor (4), aufweist, wobei die Maschine durch einen Rahmen oder ein Gehäuse (2) mit einem endseitigen Aufnahmemund (12) für das Material ausgebildet ist, wo das Material durch Mittel zugeführt wird, welche das Volumen der Materialaufnahme in die Maschine regeln, wobei das Material an der Maschinenaufnahme (12) durch Mittel eines Rotors (13) mit Hämmern (14) geschnitten wird, welche die Zentrifugalkraft, die sie erzeugen, auf das Schnittmaterial übertragen, so dass dieses zu einem Brecherrotor (15) weitergeleitet wird, der parallel zur Achse des vorhergehenden Rotors (13), jedoch auf einer höheren Ebene, angeordnet ist, wo der Brecherrotor (15) Hämmer (16) aufweist und das Material bricht, während es zwischen den einander gegenüber liegenden Hämmern in der Nähe von einigen Brechern durchgeführt wird, die an der Maschinenstruktur befestigt sind, **dadurch gekennzeichnet, dass** das gebrochene Material durch einige Siebe (17) läuft, welche dem Material die gewünschte Komgröße verleihen und dadurch, dass das gebrochene Material aus diesen Sieben (17) auf ein Schneckengetriebe (19) fällt, welches das gebrochene Material zu einer Seitenkammer transportiert, in der sich eine Turbine (20) befindet, welche das gebrochene Material durch eine Leitung (21) treibt, welche das Material zu einem Behälter (6) führt.

2. Maschine nach Anspruch 1, **dadurch gekennzeichnet, dass** der Behälter (6) für gebrochenes Material auf einer geeigneten Trägerstruktur angeordnet ist, welche sich auf einem Punkt (7) dreht, und wobei diese Drehung durch seitliche Hydraulikzylinder (8) geregelt wird, welche so wirken, dass der Behälter (6) geleert und neu positioniert wird.

3. Maschine nach Anspruch 1, **dadurch gekennzeichnet, dass** der Abtransport des gebrochenen Materials vom Behälter (6) mit Hilfe eines Luftstroms (22) erfolgt, der aus der Turbine (20) geführt und geleitet wird, welche in das Innere des Behälters reicht, in dem zwei Propeller (26) angeordnet sind, die vertikale Achsen aufweisen, die mit entsprechenden Ausgängen von zwei Hydraulikmotoren (25) verbunden sind, wobei das gebrochene Material über eine Ausstoßwirkung durch einen vertikalen Leitungssatz (24) im Behälter (6) getrieben wird.

4. Maschine nach Anspruch 1, **dadurch gekennzeichnet, dass** die Mittel zum Zuführen des Materials und zum Regeln des Aufnahmevolumens des Materials in die Maschine aus mindestens einem Förderband (9) bestehen, das sich um einen Punkt in der Struktur der Maschine dreht, wobei jede Drehung durch seitliche Hydraulikzylinder (10) geregelt wird, wobei das Förderband (9) Haken (11) aufweist, welche das zu brechende Material zur Maschinenaufnahme (12) hin bewegen.

## Revendications

1. Machine moissonneuse de bois (1) du type ayant des moyens de fixation (3) à un véhicule, tel qu'un tracteur (4), dans laquelle est formé un châssis ou boîtier (2) avec une embouchure d'extrémité d'entrée (12) pour le matériau, dans laquelle le matériau est amené par des moyens régulant le volume d'entrée de celui-ci vers la machine, le matériau à l'entrée machine (12) est coupé au moyen d'un rotor interne (13) par des marteaux (14) transmettant la force centrifuge qu'ils engendrent au matériau coupé de sorte qu'il passe à un rotor de broyage (15) placé en parallèle à l'axe du rotor précédent (13) mais à un plan supérieur, où le rotor de broyage (15) a des marteaux (16) et broie le matériau lorsqu'il passe entre les marteaux en regard près d'un certain nombre d'éléments briseurs fixés à la structure de la machine, **caractérisée par le fait que** le matériau broyé traverse quelques écrans (17) qui donnent au matériau la granulométrie voulue et, depuis ces écrans (17), le matériau broyé tombe dans un engrenage à vis (19) qui le transporte à une chambre latérale dans laquelle se trouve une turbine (20) qui propulse le matériau broyé à travers un conduit (21) le conduisant à un récipient (6).

2. Machine selon la revendication 1, **caractérisée par le fait que** le récipient (6) à matériau broyé est placé sur une structure porteuse appropriée tournant en un point (7) et le tour est commandé par des pistons hydrauliques latéraux (8) servant à vider et remplir le récipient (6).

3. Machine selon la revendication 1, **caractérisée par le fait que** le déchargement du matériau broyé hors du récipient (6) est effectué au moyen d'un courant d'air (22) mené et venant de la turbine (20) qui atteint l'intérieur du récipient dans lequel se trouvent deux hélices (26) à axes verticaux reliées aux sorties respectives de deux moteurs hydrauliques (25), propulsant le matériau broyé par un effet d'injecteur à travers un ensemble de conduits verticaux (24) dans le récipient (6).

4. Machine selon la revendication 1, **caractérisée par le fait que** les moyens d'alimentation en matériau et de régulation du volume d'entrée de celui-ci dans la machine consistent en au moins une courroie de convoyeur (9) tournant autour d'un point dans la structure de la machine, et où le tour de chacune est commandé par des pistons hydrauliques latéraux (10), la courroie de convoyeur (9) ayant des crochets (11) déplaçant le matériau à broyer vers l'entrée de la machine (12).
